# EUROPÄISCHE PATENTSCHRIFT

(11) **EP 3 471 369 B1**
(45) Veröffentlichungstag und Bekanntmachung des Hinweises auf die Patenterteilung: **15.04.2020**
(21) Anmeldenummer: 18198105.1
(22) Anmeldetag: 02.10.2018
(51) Int. Cl.: H04L 29/06, G06F 21/44

(54) **NETZWERKKNOTEN ZUM ERZEUGEN EINES AUTHENTIFIZIERUNGSINDIKATORS**
NETWORK NODE FOR GENERATING AN AUTHENTICATION INDICATOR
NOEUDS DE RÉSEAU DESTINÉS À GÉNÉRER UN INDICATEUR D'AUTHENTIFICATION

(30) Priorität: 12.10.2017 DE 102017123804
(43) Veröffentlichungstag der Anmeldung: 17.04.2019
(73) Patentinhaber: Bundesdruckerei GmbH, 10969 Berlin (DE)
(72) Erfinder: WILKE, Andreas, 13509 Berlin (DE); DRESSEL, Olaf, 14641 Wustermark (DE); KOMAROV, Ilya, 13507 Berlin (DE)
(74) Vertreter: Patentship Patentanwaltsgesellschaft mbH

(56) Entgegenhaltungen:
- US-A1- 2011 093 703
- US-A1- 2012 144 479

## Beschreibung

Die vorliegende Erfindung betrifft das Gebiet der Netzwerktechnik, insbesondere der Authentifikation von Netzwerkknoten in einem Kommunikationsnetzwerk.

Die Offenlegungsschrift US 2011/093703 A1 offenbart einen Netzwerkknoten zum Aussenden eines Betriebsparameters des Netzwerkknotens.

Die Offenlegungsschrift US 2012/144479 A1 offenbart ein System, eine sichere Vorrichtung und ein Verfahren zum dynamischen Authentifizieren einer Host-Vorrichtung.

Bei der Vernetzung von Maschinenparks oder Produktionsprozessen über Kommunikationsnetzwerke besteht häufig das Problem, eine Verifikation der Authentizität und Integrität einzelner Netzwerkknoten des Kommunikationsnetzwerkes von oberen Softwarekomponenten bis auf die Sensorebene zu realisieren. Dies ist deshalb relevant, da für die Authentizität und Integrität des Kommunikationsnetzwerkes gewährleistet sein sollte, dass jeder Netzwerkknoten des Kommunikationsnetzwerkes, inklusive Sensoren, Controller, Maschinen und Softwarekomponenten, auch vertrauenswürdig ist.

In diesem Zusammenhang soll bei vernetzten Maschinenparks oder Produktionsprozessen insbesondere die Kommunikation zwischen den beteiligten Netzwerkknoten geschützt werden, damit potentielle Angriffe auf das Kommunikationsnetzwerk, beispielsweise Denialof-Service (DoS) Angriffe, oder ein unerlaubtes Einspeisen falscher Nutzdaten in das Kommunikationsnetzwerk erschwert bzw. unmöglich wird. Zugleich soll die Bedienbarkeit erhalten bleiben und eine reguläre Arbeitskommunikation nicht beeinträchtigt werden.

Es ist daher eine Aufgabe der vorliegenden Erfindung, ein effizientes Konzept zur Verifikation einer Authentizität eines Netzwerkknotens in einem Kommunikationsnetzwerk zu schaffen.

Diese Aufgabe wird durch die Merkmale der unabhängigen Patentansprüche gelöst. Vorteilhafte Weiterbildungsformen sind Gegenstand der abhängigen Patentansprüche, der Beschreibung sowie der Zeichnungen.

Die Erfindung basiert auf der Erkenntnis und schließt diese mit ein, dass die obige Aufgabe durch einen Netzwerkknoten gelöst werden kann, welcher einen Betriebsparameter eines weiteren Netzwerkknotens des Kommunikationsnetzwerkes überwacht und diesen mit einem entsprechenden Referenzbetriebsparametern des weiteren Netzwerkknotens vergleicht, um unerwartete Abweichungen eines Betriebszustandes von einem Referenzbetriebszustand des weiteren Netzwerkknotens zu detektieren. Der Netzwerkknoten kann auf dieser Basis einen Authentifizierungsindikator erzeugen, welcher eine erfolgreiche Authentifizierung oder eine fehlgeschlagene Authentifizierung eines weiteren Netzwerkknotens durch den Netzwerkknoten anzeigt.

Der erzeugte Authentifizierungsindikator kann anschließend beispielsweise mittels eines Broadcasts oder eines Multicasts an andere Netzwerkknoten in dem Kommunikationsnetzwerk verteilt werden. Ferner kann der Netzwerkknoten eine Mehrzahl von weiteren Authentifizierungsindikatoren über das Kommunikationsnetzwerk empfangen, wobei die Mehrzahl von weiteren Authentifizierungsindikatoren ihrerseits beispielsweise mittels eines Broadcasts oder eines Multicasts von den anderen Netzwerkknoten über das Kommunikationsnetzwerk verteilt wurde. Der Netzwerkknoten kann anschließend entscheiden, ob hinsichtlich des einzelnen weiteren Netzwerkknotens mehrheitlich eine erfolgreiche Authentifizierung oder mehrheitlich eine fehlgeschlagene Authentifizierung vorliegt. Folglich kann eine Übertragung von Nutzdaten zwischen dem Netzwerkknoten und dem weiteren Netzwerkknoten zugelassen oder unterbunden werden.

Das Konzept eignet sich beispielsweise für heterogene Kommunikationsnetzwerke, in welchen für die Netzwerkknoten sowohl analoge als auch digitale Komponenten verwendet werden. Der überwachte Betriebsparameter kann beispielsweise eine analoge Größe, wie beispielsweise eine elektrische Spannung oder ein elektrischer Strom, oder eine digitale Größe, wie beispielsweise eine Prozessorauslastung oder eine Speicherauslastung, sein.

Gemäß einem ersten Aspekt betrifft die Erfindung einen Netzwerkknoten zum Erzeugen eines Authentifizierungsindikators. Der Netzwerkknoten umfasst eine Kommunikationsschnittstelle, welche ausgebildet ist, einen Betriebsparameter eines weiteren Netzwerkknotens über ein Kommunikationsnetzwerk zu empfangen, wobei der Betriebsparameter des weiteren Netzwerkknotens einen Betriebszustand des weiteren Netzwerkknotens repräsentiert. Der Netzwerkknoten umfasst ferner einen Speicher, welcher ausgebildet ist, einen Referenzbetriebsparameter des weiteren Netzwerkknotens zu speichern, wobei der Referenzbetriebsparameter einen Referenzbetriebszustand des weiteren Netzwerkknotens repräsentiert. Der Netzwerkknoten umfasst ferner einen Prozessor, welcher ausgebildet ist, den Betriebsparameter mit dem Referenzbetriebsparameter zu vergleichen, um ein Vergleichsergebnis zu erhalten, und den Authentifizierungsindikator auf der Basis des Vergleichsergebnisses zu erzeugen, wobei der Authentifizierungsindikator eine erfolgreiche Authentifizierung des weiteren Netzwerkknotens durch den Netzwerkknoten oder eine fehlgeschlagene Authentifizierung des weiteren Netzwerkknotens durch den Netzwerkknoten anzeigt.

Der Authentifizierungsindikator repräsentiert, je nach verwendetem Betriebsparameter bzw. Referenzbetriebsparameter, ob eine unerwartete Abweichungen eines Betriebszustandes des weiteren Netzwerkknotens von einem Referenzbetriebszustand des weiteren Netzwerkknotens von dem Netzwerkknoten detektiert wurde oder nicht.

Das Vergleichsergebnis kann beispielsweise anzeigen, dass der Betriebsparameter dem Referenzbetriebsparameter entspricht, wobei gegebenenfalls ein vorbestimmter Toleranzbereich um den Referenzbetriebsparameter berücksichtigt werden kann. Das Vergleichsergebnis kann alternativ ein Überschreiten oder ein Unterschreiten des Referenzbetriebsparameters durch den Betriebsparameter anzeigen.

Der Authentifizierungsindikator kann beispielsweise eine erfolgreiche Authentifizierung des weiteren Netzwerkknotens anzeigen, wenn das Vergleichsergebnis anzeigt, dass der Betriebsparameter dem Referenzbetriebsparameter entspricht. Ferner kann der Authentifizierungsindikator eine fehlgeschlagene Authentifizierung des weiteren Netzwerkknotens anzeigen, wenn das Vergleichsergebnis anzeigt, dass der Betriebsparameter den Referenzbetriebsparameter überschreitet oder unterschreitet.

Gemäß einer Ausführungsform ist die Kommunikationsschnittstelle ausgebildet, den Authentifizierungsindikator, insbesondere als Broadcast oder als Multicast, über das Kommunikationsnetzwerk auszusenden. Dadurch wird der Vorteil erreicht, dass eine erfolgreiche oder fehlgeschlagene Authentifizierung des weiteren Netzwerkknotens durch den Netzwerkknoten effizient signalisiert werden kann.

Die Kommunikationsschnittstelle ist ausgebildet, eine Mehrzahl von weiteren Authentifizierungsindikatoren über das Kommunikationsnetzwerk zu empfangen, und wobei der Prozessor ausgebildet ist, eine Anzahl von erfolgreichen Authentifizierungen des weiteren Netzwerkknotens auf der Basis des Authentifizierungsindikators und der Mehrzahl von weiteren Authentifizierungsindikatoren zu bestimmen, und eine Anzahl von fehlgeschlagenen Authentifizierungen des weiteren Netzwerkknotens auf der Basis des Authentifizierungsindikators und der Mehrzahl von weiteren Authentifizierungsindikatoren zu bestimmen. Dadurch wird der Vorteil erreicht, dass eine erfolgreiche oder fehlgeschlagene Authentifizierung des weiteren Netzwerkknotens durch andere Netzwerkknoten dem Netzwerkknoten effizient signalisiert werden kann.

Der Prozessor ist ausgebildet, die Anzahl von erfolgreichen Authentifizierungen des weiteren Netzwerkknotens mit der Anzahl von fehlgeschlagenen Authentifizierungen des weiteren Netzwerkknotens zu vergleichen, und eine Übertragung von Nutzdaten zwischen dem Netzwerkknoten und dem weiteren Netzwerkknoten zu unterbinden falls die Anzahl von erfolgreichen Authentifizierungen kleiner oder gleich der Anzahl von fehlgeschlagenen Authentifizierungen ist. Dadurch wird der Vorteil erreicht, dass der weitere Netzwerkknoten von dem Kommunikationsnetzwerk isoliert werden kann, falls mehrheitlich fehlgeschlagene Authentifizierungen des weiteren Netzwerkknotens vorliegen.

Die Nutzdaten können beispielsweise Applikationsdaten, Sensordaten oder Befehlsdaten sein. Eine Übertragung von Steuerdaten, insbesondere von Betriebsparameter, zwischen dem Netzwerkknoten und dem weiteren Netzwerkknoten kann weiterhin möglich bleiben.

Gemäß einer Ausführungsform ist der Prozessor ausgebildet, die Übertragung von Nutzdaten zwischen dem Netzwerkknoten und dem weiteren Netzwerkknoten zuzulassen falls die Anzahl von erfolgreichen Authentifizierungen größer als die Anzahl von fehlgeschlagenen Authentifizierungen ist. Dadurch wird der Vorteil erreicht, dass der weitere Netzwerkknoten innerhalb des Kommunikationsnetzwerkes Nutzdaten kommunizieren kann bzw. eine Isolation des weiteren Netzwerkknotens wieder aufgehoben werden kann.

Gemäß einer Ausführungsform ist der Prozessor ausgebildet, die Anzahl von erfolgreichen Authentifizierungen mit einem ersten Gewichtungsfaktor zu gewichten und/oder die Anzahl von fehlgeschlagenen Authentifizierungen mit einem zweiten Gewichtungsfaktor zu gewichten. Dadurch wird der Vorteil erreicht, dass beispielsweise eine topologische Anordnung der beteiligten Netzwerkknoten berücksichtigt werden kann.

Beispielsweise kann Authentifizierungsindikatoren von Netzwerkknoten mit einer höheren Anzahl an benachbarten Netzwerkknoten ein höheres Gewicht beigemessen werden als Authentifizierungsindikatoren von Netzwerkknoten mit einer geringeren Anzahl an benachbarten Netzwerkknoten.

Gemäß einer Ausführungsform umfasst der Betriebsparameter zumindest einen der folgenden Betriebsparameter: eine elektrische Spannung einer elektrischen Schaltung des weiteren Netzwerkknotens, einen elektrischen Strom einer elektrischen Schaltung des weiteren Netzwerkknotens, eine Resonanzfrequenz einer elektrischen Schaltung des weiteren Netzwerkknotens, eine Betriebstemperatur des weiteren Netzwerkknotens, eine Prozessorauslastung eines Prozessors des weiteren Netzwerkknotens, oder eine Speicherauslastung eines Speichers des weiteren Netzwerkknotens. Dadurch wird der Vorteil erreicht, dass sowohl analoge Größen als auch digitale Größen als Betriebsparameter verwendet werden können.

Gemäß einer Ausführungsform umfasst der Referenzbetriebsparameter zumindest einen der folgenden Referenzbetriebsparameter: eine elektrische Referenzspannung einer elektrischen Schaltung des weiteren Netzwerkknotens, einen elektrischen Referenzstrom einer elektrischen Schaltung des weiteren Netzwerkknotens, eine Referenzresonanzfrequenz einer elektrischen Schaltung des weiteren Netzwerkknotens, eine Referenzbetriebstemperatur des weiteren Netzwerkknotens, eine Referenzprozessorauslastung eines Prozessors des weiteren Netzwerkknotens, oder eine Referenzspeicherauslastung eines Speichers des weiteren Netzwerkknotens. Dadurch wird der Vorteil erreicht, dass sowohl analoge Größen als auch digitale Größen als Referenzbetriebsparameter verwendet werden können.

Gemäß einer Ausführungsform ist die Kommunikationsschnittstelle ausgebildet, den Betriebsparameter des weiteren Netzwerkknotens periodisch innerhalb eines vorbestimmtes Zeitintervalls über das Kommunikationsnetzwerk zu empfangen, und wobei der Prozessor ausgebildet ist, eine Parametermetrik, insbesondere einen Mittelwert, einen Minimalwert oder einen Maximalwert, des periodisch empfangenen Betriebsparameters innerhalb des vorbestimmten Zeitintervalls zu bestimmen, und die Parametermetrik als Referenzbetriebsparameter in dem Speicher zu speichern. Dadurch wird der Vorteil erreicht, dass der Referenzbetriebsparameter effizient erstmalig bestimmt bzw. laufend aktualisiert werden kann.

Das vorbestimmte Zeitintervall zur Bestimmung der Parametermetrik kann beispielsweise eine Zeitdauer von 1 Stunde, 2 Stunden, 5 Stunden, 10 Stunden, 20 Stunden, 1 Tag, 2 Tagen, 5 Tagen oder 1 Woche aufweisen.

Ein zweiter Aspekt betrifft einen Netzwerkknoten zum Aussenden eines Betriebsparameters des Netzwerkknotens. Der Netzwerkknoten umfasst eine Erfassungseinrichtung, welche ausgebildet ist, den Betriebsparameters des Netzwerkknotens zu erfassen, wobei der Betriebsparameter des Netzwerkknotens einen Betriebszustand des Netzwerkknotens repräsentiert. Der Netzwerkknoten umfasst ferner eine Kommunikationsschnittstelle, welche ausgebildet ist, den Betriebsparameter des Netzwerkknotens über ein Kommunikationsnetzwerk auszusenden.

Gemäß einer Ausführungsform ist die Erfassungseinrichtung ausgebildet, den Betriebsparameter des Netzwerkknotens periodisch zu erfassen, wobei die Kommunikationsschnittstelle ausgebildet ist, den Betriebsparameter des Netzwerkknotens periodisch über das Kommunikationsnetzwerk auszusenden. Dadurch wird der Vorteil erreicht, dass der Netzwerkknoten eine laufende Überwachung seines Betriebszustandes durch andere Netzwerkknoten ermöglicht.

Der Betriebsparameter des Netzwerkknotens kann mit einer vorbestimmten Periodendauer periodisch ausgesendet werden. Die vorbestimmte Periodendauer kann beispielsweise 1 Sekunde, 2 Sekunden, 5 Sekunden, 10 Sekunden, 1 Minute, 2 Minuten, 5 Minuten oder 10 Minuten sein.

Gemäß einer Ausführungsform umfasst der Betriebsparameter zumindest einen der folgenden Betriebsparameter: eine elektrische Spannung einer elektrischen Schaltung des Netzwerkknotens, einen elektrischen Strom einer elektrischen Schaltung des Netzwerkknotens, eine Resonanzfrequenz einer elektrischen Schaltung des Netzwerkknotens, eine Betriebstemperatur des Netzwerkknotens, eine Prozessorauslastung eines Prozessors des Netzwerkknotens, oder eine Speicherauslastung eines Speichers des Netzwerkknotens. Dadurch wird der Vorteil erreicht, dass sowohl analoge Größen als auch digitale Größen als Betriebsparameter verwendet werden können.

Die Erfassungseinrichtung kann je nach verwendetem Betriebsparameter einen geeigneten Sensor zum Erfassen des Betriebsparameters umfassen. Beispielsweise kann die Erfassungseinrichtung einen Spannungssensor zum Erfassen der elektrischen Spannung, einen Stromsensor zum Erfassen des elektrischen Stromes, einen Resonanzfrequenzsensor zum Erfassen der Resonanzfrequenz, oder einen Temperatursensor zum Erfassen der Betriebstemperatur umfassen.

Die Erfassungseinrichtung kann ferner einen Prozessorauslastungssensor zum Erfassen der Prozessorauslastung oder einen Speicherauslastungssensor zum Erfassen der Speicherauslastung umfassen. Ferner kann die Erfassungseinrichtung eine Datenschnittstelle aufweisen, welche ausgebildet ist, einen Prozessorauslastungsindikator und/oder einen Speicherauslastungsindikator zu empfangen, wobei der Prozessorauslastungsindikator die Prozessorauslastung anzeigt, und wobei der Speicherauslastungsindikator die Speicherauslastung anzeigt. Der Prozessorauslastungsindikator und/oder der Speicherauslastungsindikator können durch den Prozessor des Netzwerkknotens und/oder den Speicher des Netzwerkknotens bereitgestellt und ausgesendet werden.

Gemäß einem dritten Aspekt betrifft die Erfindung ein Kommunikationssystem zum Kommunizieren über ein Kommunikationsnetzwerk. Das Kommunikationssystem umfasst einen Netzwerkknoten gemäß dem ersten Aspekt der Erfindung, und einen weiteren Netzwerkknoten gemäß dem zweiten Aspekt.

Gemäß einer Ausführungsform sind der Netzwerkknoten und der weitere Netzwerkknoten logisch benachbart. Dadurch wird der Vorteil erreicht, dass eine Überwachung eines Netzwerkknotens durch einen logisch benachbarten Netzwerkknoten erreicht werden kann. Die logische Nachbarschaft der Netzwerkknoten basiert hierbei auf der Netzwerktopologie des Kommunikationsnetzwerkes.

Gemäß einer Ausführungsform sind der Netzwerkknoten und der weitere Netzwerkknoten geographisch benachbart. Dadurch wird der Vorteil erreicht, dass eine Überwachung eines Netzwerkknotens durch einen geographisch benachbarten Netzwerkknoten erreicht werden kann. Die geographische Nachbarschaft der Netzwerkknoten basiert hierbei auf der geographischen Anordnung der Netzwerkknoten in dem Kommunikationsnetzwerk.

Gemäß einem vierten Aspekt betrifft die Erfindung ein Verfahren zum Betreiben eines Netzwerkknotens zum Erzeugen eines Authentifizierungsindikators. Der Netzwerkknoten umfasst eine Kommunikationsschnittstelle, einen Speicher und einen Prozessor. Der Speicher ist ausgebildet, einen Referenzbetriebsparameter eines weiteren Netzwerkknotens zu speichern, wobei der Referenzbetriebsparameter einen Referenzbetriebszustand des weiteren Netzwerkknotens repräsentiert. Das Verfahren umfasst ein Empfangen eines Betriebsparameters des weiteren Netzwerkknotens über ein Kommunikationsnetzwerk durch die Kommunikationsschnittstelle, wobei der Betriebsparameter des weiteren Netzwerkknotens einen Betriebszustand des weiteren Netzwerkknotens repräsentiert, ein Vergleichen des Betriebsparameters mit dem Referenzbetriebsparameter durch den Prozessor, um ein Vergleichsergebnis zu erhalten, und ein Erzeugen des Authentifizierungsindikators auf der Basis des Vergleichsergebnisses durch den Prozessor, wobei der Authentifizierungsindikator eine erfolgreiche Authentifizierung des weiteren Netzwerkknotens durch den Netzwerkknoten oder eine fehlgeschlagene Authentifizierung des weiteren Netzwerkknotens durch den Netzwerkknoten anzeigt.

Das Verfahren kann durch den Netzwerkknoten ausgeführt werden. Weitere Merkmale des Verfahrens resultieren unmittelbar aus den Merkmalen bzw. der Funktionalität des Netzwerkknotens.

Ein fünfter Aspekt betrifft ein Verfahren zum Betreiben eines Netzwerkknotens zum Aussenden eines Betriebsparameters des Netzwerkknotens. Der Netzwerkknoten umfasst eine Erfassungseinrichtung und eine Kommunikationsschnittstelle. Das Verfahren umfasst ein Erfassen des Betriebsparameters des Netzwerkknotens durch die Erfassungseinrichtung, wobei der Betriebsparameter des Netzwerkknotens einen Betriebszustand des Netzwerkknotens repräsentiert, und ein Aussenden des Betriebsparameters des Netzwerkknotens über ein Kommunikationsnetzwerk durch die Kommunikationsschnittstelle.

Das Verfahren kann durch den Netzwerkknoten ausgeführt werden. Weitere Merkmale des Verfahrens resultieren unmittelbar aus den Merkmalen bzw. der Funktionalität des Netzwerkknotens.

Gemäß einem sechsten Aspekt betrifft die Erfindung ein Computerprogramm mit einem Programmcode zum Ausführen des Verfahrens gemäß dem vierten Aspekt der Erfindung oder des Verfahrens gemäß dem fünften Aspekt, wenn das Programm auf einem Netzwerkknoten ausgeführt wird.

Weitere Ausführungsbeispiele werden Bezug nehmend auf die beiliegenden Zeichnungen näher erläutert. Es zeigen:
- Fig. 1: ein schematisches Diagramm eines Netzwerkknotens zum Erzeugen eines Authentifizierungsindikators;
- Fig. 2: ein schematisches Diagramm eines Netzwerkknotens zum Aussenden eines Betriebsparameters des Netzwerkknotens;
- Fig. 3: ein schematisches Diagramm eines Kommunikationssystems zum Kommunizieren über ein Kommunikationsnetzwerk;
- Fig. 3a: ein schematisches Diagramm eines Kommunikationssystems zum Kommunizieren über ein Kommunikationsnetzwerk;
- Fig. 4: ein schematisches Diagramm eines Verfahrens zum Betreiben eines Netzwerkknotens zum Erzeugen eines Authentifizierungsindikators; und
- Fig. 5: ein schematisches Diagramm eines Verfahrens zum Betreiben eines Netzwerkknotens zum Aussenden eines Betriebsparameters des Netzwerkknotens.

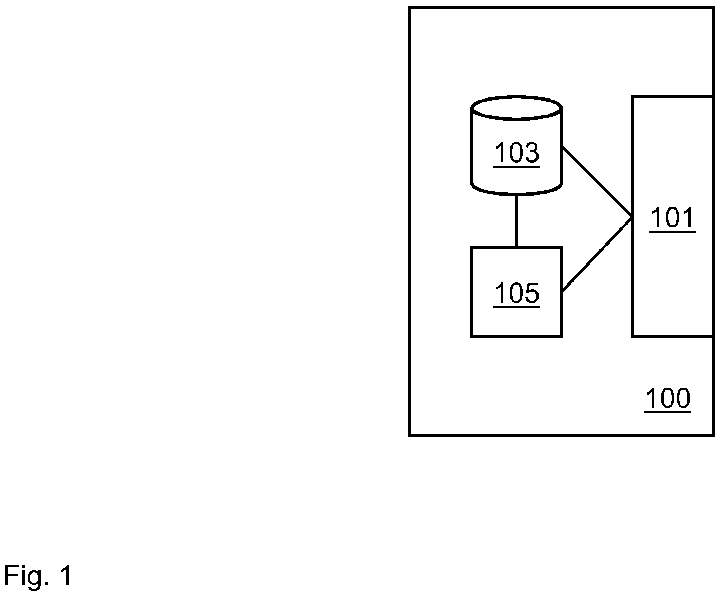

Fig. 1 zeigt ein schematisches Diagramm eines Netzwerkknotens 100 zum Erzeugen eines Authentifizierungsindikators. Der Netzwerkknoten 100 umfasst eine Kommunikationsschnittstelle 101, welche ausgebildet ist, einen Betriebsparameter eines weiteren Netzwerkknotens über ein Kommunikationsnetzwerk zu empfangen, wobei der Betriebsparameter des weiteren Netzwerkknotens einen Betriebszustand des weiteren Netzwerkknotens repräsentiert. Der Netzwerkknoten 100 umfasst ferner einen Speicher 103, welcher ausgebildet ist, einen Referenzbetriebsparameter des weiteren Netzwerkknotens zu speichern, wobei der Referenzbetriebsparameter einen Referenzbetriebszustand des weiteren Netzwerkknotens repräsentiert. Der Netzwerkknoten 100 umfasst ferner einen Prozessor 105, welcher ausgebildet ist, den Betriebsparameter mit dem Referenzbetriebsparameter zu vergleichen, um ein Vergleichsergebnis zu erhalten, und den Authentifizierungsindikator auf der Basis des Vergleichsergebnisses zu erzeugen, wobei der Authentifizierungsindikator eine erfolgreiche Authentifizierung des weiteren Netzwerkknotens durch den Netzwerkknoten oder eine fehlgeschlagene Authentifizierung des weiteren Netzwerkknotens durch den Netzwerkknoten anzeigt.

In einem ersten Beispiel ist der Betriebsparameter eine elektrische Spannung einer elektrischen Schaltung des weiteren Netzwerkknotens. Der Referenzbetriebsparameter ist entsprechend eine elektrische Referenzspannung der elektrischen Schaltung des weiteren Netzwerkknotens. In diesem Beispiel soll der weitere Netzwerkknoten als durch den Netzwerkknoten 100 authentifiziert gelten, falls die elektrische Spannung die elektrische Referenzspannung überschreitet. Der Prozessor 105 vergleicht die elektrische Spannung als Betriebsparameter mit der elektrischen Referenzspannung als Referenzbetriebsparameter und erhält beispielsweise als Vergleichsergebnis, dass der Betriebsparameter den Referenzbetriebsparameter überschreitet. Der Prozessor 105 erzeugt folglich einen Authentifizierungsindikator, welcher eine erfolgreiche Authentifizierung des weiteren Netzwerkknotens durch den Netzwerkknoten 100 anzeigt. Alternativ erhält der Prozessor 105 als Vergleichsergebnis, dass der Betriebsparameter dem Referenzbetriebsparameter entspricht oder diesen unterschreitet. Der Prozessor 105 erzeugt folglich einen Authentifizierungsindikator, welcher eine fehlgeschlagene Authentifizierung des weiteren Netzwerkknotens durch den Netzwerkknoten 100 anzeigt.

In einem zweiten Beispiel ist der Betriebsparameter eine Resonanzfrequenz einer elektrischen Schaltung, beispielsweise eines elektrischen Schwingkreises, des weiteren Netzwerkknotens. Der Referenzbetriebsparameter ist entsprechend eine Referenzresonanzfrequenz der elektrischen Schaltung des weiteren Netzwerkknotens. In diesem Beispiel soll der weitere Netzwerkknoten als durch den Netzwerkknoten 100 authentifiziert gelten, falls die Resonanzfrequenz der Referenzresonanzfrequenz entspricht, wobei ein vorbestimmter Toleranzbereich, beispielsweise von 1% um die Referenzresonanzfrequenz, berücksichtigt werden kann. Der Prozessor 105 vergleicht die Resonanzfrequenz als Betriebsparameter mit der Referenzresonanzfrequenz als Referenzbetriebsparameter und erhält beispielsweise als Vergleichsergebnis, dass der Betriebsparameter dem Referenzbetriebsparameter entspricht. Der Prozessor 105 erzeugt folglich einen Authentifizierungsindikator, welcher eine erfolgreiche Authentifizierung des weiteren Netzwerkknotens durch den Netzwerkknoten 100 anzeigt. Alternativ erhält der Prozessor 105 als Vergleichsergebnis, dass der Betriebsparameter den Referenzbetriebsparameter überschreitet oder unterschreitet. Der Prozessor 105 erzeugt folglich einen Authentifizierungsindikator, welcher eine fehlgeschlagene Authentifizierung des weiteren Netzwerkknotens durch den Netzwerkknoten 100 anzeigt.

In einem dritten Beispiel ist der Betriebsparameter eine Prozessorauslastung eines Prozessors des weiteren Netzwerkknotens. Der Referenzbetriebsparameter ist entsprechend eine Referenzprozessorauslastung des Prozessors des weiteren Netzwerkknotens. In diesem Beispiel soll der weitere Netzwerkknoten als durch den Netzwerkknoten 100 authentifiziert gelten, falls die Prozessorauslastung die Referenzprozessorauslastung unterschreitet. Der Prozessor 105 vergleicht die Prozessorauslastung als Betriebsparameter mit der Referenzprozessorauslastung als Referenzbetriebsparameter und erhält beispielsweise als Vergleichsergebnis, dass der Betriebsparameter den Referenzbetriebsparameter unterschreitet. Der Prozessor 105 erzeugt folglich einen Authentifizierungsindikator, welcher eine erfolgreiche Authentifizierung des weiteren Netzwerkknotens durch den Netzwerkknoten 100 anzeigt. Alternativ erhält der Prozessor 105 als Vergleichsergebnis, dass der Betriebsparameter dem Referenzbetriebsparameter entspricht oder diesen überschreitet. Der Prozessor 105 erzeugt folglich einen Authentifizierungsindikator, welcher eine fehlgeschlagene Authentifizierung des weiteren Netzwerkknotens durch den Netzwerkknoten 100 anzeigt.

Die beschriebenen Beispiele können auf beliebige Kombinationen von Betriebsparametern und Referenzbetriebsparametern verallgemeinert werden, wobei vorab lediglich definiert sein sollten, welches Vergleichsergebnis einer erfolgreichen Authentifizierung oder einer fehlgeschlagenen Authentifizierung des weiteren Netzwerkknotens entsprechen soll. Als Betriebsparameter bzw. Referenzbetriebsparameter können im Allgemeinen verschiedene analoge oder digitale Größen verwendet werden, welche einen Betriebszustand bzw. ein Betriebsverhalten des weiteren Netzwerkknotens repräsentieren.

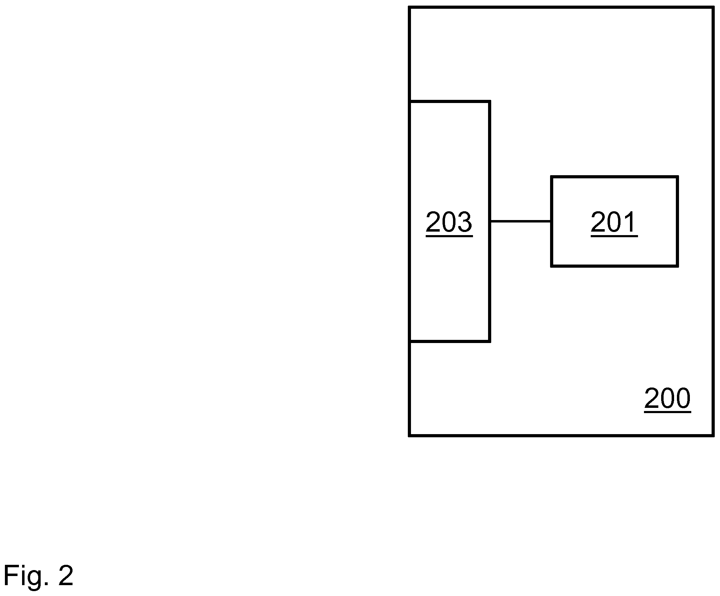

Fig. 2 zeigt ein schematisches Diagramm eines Netzwerkknotens 200 zum Aussenden eines Betriebsparameters des Netzwerkknotens 200. Der Netzwerkknoten 200 umfasst eine Erfassungseinrichtung 201, welche ausgebildet ist, den Betriebsparameters des Netzwerkknotens 200 zu erfassen, wobei der Betriebsparameter des Netzwerkknotens 200 einen Betriebszustand des Netzwerkknotens 200 repräsentiert. Der Netzwerkknoten 200 umfasst ferner eine Kommunikationsschnittstelle 203, welche ausgebildet ist, den Betriebsparameter des Netzwerkknotens 200 über ein Kommunikationsnetzwerk auszusenden.

Die Erfassungseinrichtung 201 kann je nach verwendetem Betriebsparameter einen geeigneten Sensor zum Erfassen des Betriebsparameters umfassen. Beispielsweise kann die Erfassungseinrichtung 201 einen Spannungssensor zum Erfassen einer elektrischen Spannung, einen Stromsensor zum Erfassen eines elektrischen Stromes, einen Resonanzfrequenzsensor zum Erfassen einer Resonanzfrequenz, oder einen Temperatursensor zum Erfassen einer Betriebstemperatur umfassen.

Die Erfassungseinrichtung 201 kann ferner einen Prozessorauslastungssensor zum Erfassen einer Prozessorauslastung oder einen Speicherauslastungssensor zum Erfassen einer Speicherauslastung umfassen. Ferner kann die Erfassungseinrichtung 201 eine Datenschnittstelle aufweisen, welche ausgebildet ist, einen Prozessorauslastungsindikator und/oder einen Speicherauslastungsindikator zu empfangen, wobei der Prozessorauslastungsindikator die Prozessorauslastung anzeigt, und wobei der Speicherauslastungsindikator die Speicherauslastung anzeigt. Der Prozessorauslastungsindikator und/oder der Speicherauslastungsindikator können durch einen Prozessor des Netzwerkknotens 200 und/oder einen Speicher des Netzwerkknotens 200 bereitgestellt und ausgesendet werden.

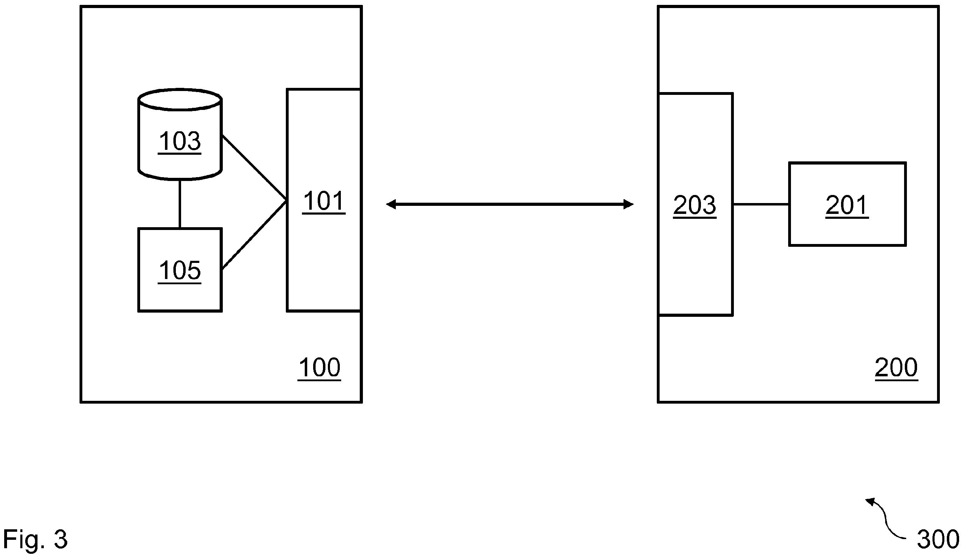

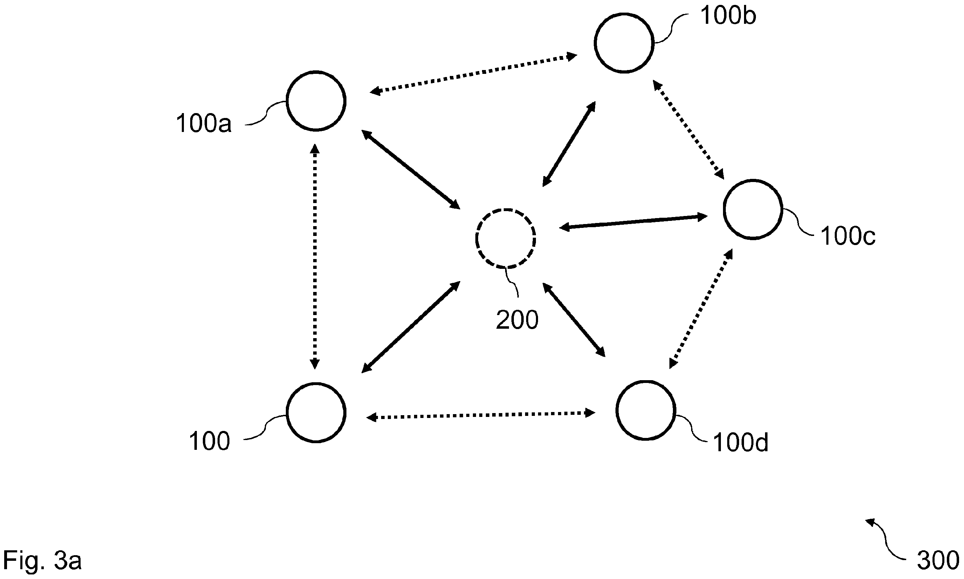

Fig. 3 zeigt ein schematisches Diagramm eines Kommunikationssystems 300 zum Kommunizieren über ein Kommunikationsnetzwerk. Das Kommunikationssystem 300 umfasst einen Netzwerkknoten 100 und einen weiteren Netzwerkknoten 200.

Der Netzwerkknoten 100 ist ausgebildet, einen Authentifizierungsindikator zu erzeugen. Der Netzwerkknoten 100 umfasst eine Kommunikationsschnittstelle 101, welche ausgebildet ist, einen Betriebsparameter des weiteren Netzwerkknotens 200 über ein Kommunikationsnetzwerk zu empfangen, wobei der Betriebsparameter des weiteren Netzwerkknotens 200 einen Betriebszustand des weiteren Netzwerkknotens 200 repräsentiert. Der Netzwerkknoten 100 umfasst ferner einen Speicher 103, welcher ausgebildet ist, einen Referenzbetriebsparameter des weiteren Netzwerkknotens 200 zu speichern, wobei der Referenzbetriebsparameter einen Referenzbetriebszustand des weiteren Netzwerkknotens 200 repräsentiert. Der Netzwerkknoten 100 umfasst ferner einen Prozessor 105, welcher ausgebildet ist, den Betriebsparameter mit dem Referenzbetriebsparameter zu vergleichen, um ein Vergleichsergebnis zu erhalten, und den Authentifizierungsindikator auf der Basis des Vergleichsergebnisses zu erzeugen, wobei der Authentifizierungsindikator eine erfolgreiche Authentifizierung des weiteren Netzwerkknotens 200 durch den Netzwerkknoten 100 oder eine fehlgeschlagene Authentifizierung des weiteren Netzwerkknotens 200 durch den Netzwerkknoten 100 anzeigt.

Der weitere Netzwerkknoten 200 ist ausgebildet, den Betriebsparameter des weiteren Netzwerkknotens 200 auszusenden. Der weitere Netzwerkknoten 200 umfasst eine Erfassungseinrichtung 201, welche ausgebildet ist, den Betriebsparameters des weiteren Netzwerkknotens 200 zu erfassen, wobei der Betriebsparameter des weiteren Netzwerkknotens 200 den Betriebszustand des weiteren Netzwerkknotens 200 repräsentiert. Der weitere Netzwerkknoten 200 umfasst ferner eine Kommunikationsschnittstelle 203, welche ausgebildet ist, den Betriebsparameter des weiteren Netzwerkknotens 200 über das Kommunikationsnetzwerk an den Netzwerkknoten 100 auszusenden.

Fig. 3a zeigt ein schematisches Diagramm eines Kommunikationssystems 300 zum Kommunizieren über ein Kommunikationsnetzwerk. Das Kommunikationssystem 300 umfasst eine Mehrzahl von Netzwerkknoten 100, 100a, 100b, 100c, 100d sowie einen weiteren Netzwerkknoten 200. Die Mehrzahl von Netzwerkknoten 100, 100a, 100b, 100c, 100d sind identisch aufgebaut und weisen identische Funktionalitäten auf.

Jeder Netzwerkknoten 100, 100a, 100b, 100c, 100d ist ausgebildet, einen jeweiligen Authentifizierungsindikator zu erzeugen. Jeder Netzwerkknoten 100, 100a, 100b, 100c, 100d umfasst eine Kommunikationsschnittstelle, welche ausgebildet ist, einen Betriebsparameter des weiteren Netzwerkknotens 200 über das Kommunikationsnetzwerk zu empfangen, wobei der Betriebsparameter des weiteren Netzwerkknotens 200 einen Betriebszustand des weiteren Netzwerkknotens 200 repräsentiert. Jeder Netzwerkknoten 100, 100a, 100b, 100c, 100d umfasst ferner einen Speicher, welcher ausgebildet ist, einen jeweiligen Referenzbetriebsparameter des weiteren Netzwerkknotens 200 zu speichern, wobei der jeweilige Referenzbetriebsparameter einen jeweiligen Referenzbetriebszustand des weiteren Netzwerkknotens 200 repräsentiert. Jeder Netzwerkknoten 100, 100a, 100b, 100c, 100d umfasst ferner einen Prozessor, welcher ausgebildet ist, den Betriebsparameter mit dem jeweiligen Referenzbetriebsparameter zu vergleichen, um ein jeweiliges Vergleichsergebnis zu erhalten, und einen jeweiligen Authentifizierungsindikator auf der Basis des jeweiligen Vergleichsergebnisses zu erzeugen, wobei der jeweilige Authentifizierungsindikator eine erfolgreiche Authentifizierung des weiteren Netzwerkknotens 200 durch den jeweiligen Netzwerkknoten 100, 100a, 100b, 100c, 100d oder eine fehlgeschlagene Authentifizierung des weiteren Netzwerkknotens 200 durch den jeweiligen Netzwerkknoten 100, 100a, 100b, 100c, 100d anzeigt. Die Kommunikationsschnittstelle kann ausgebildet sein, den jeweiligen Authentifizierungsindikator über das Kommunikationsnetzwerk, beispielsweise als Broadcast oder als Multicast, auszusenden.

Der weitere Netzwerkknoten 200 ist ausgebildet, den Betriebsparameter des weiteren Netzwerkknotens 200 auszusenden. Der weitere Netzwerkknoten 200 umfasst eine Erfassungseinrichtung, welche ausgebildet ist, den Betriebsparameters des weiteren Netzwerkknotens 200 zu erfassen, wobei der Betriebsparameter des weiteren Netzwerkknotens 200 den Betriebszustand des weiteren Netzwerkknotens 200 repräsentiert. Der weitere Netzwerkknoten 200 umfasst ferner eine Kommunikationsschnittstelle, welche ausgebildet ist, den Betriebsparameter des weiteren Netzwerkknotens 200 über das Kommunikationsnetzwerk an die Mehrzahl von Netzwerkknoten 100, 100a, 100b, 100c, 100d auszusenden. Das Aussenden des Betriebsparameters kann beispielsweise als Broadcast oder als Multicast erfolgen.

Jeder Netzwerkknoten 100, 100a, 100b, 100c, 100d kann unter Verwendung der jeweils erzeugten Authentifizierungsindikatoren entscheiden, ob eine Übertragung von Nutzdaten zwischen dem jeweiligen Netzwerkknoten 100, 100a, 100b, 100c, 100d und dem weiteren Netzwerkknoten 200 zugelassen oder unterbunden wird. Dies soll beispielshaft für den Netzwerkknoten 100 erläutert werden und gilt entsprechend für die Netzwerkknoten 100a, 100b, 100c, 100d.

Der Prozessor des Netzwerkknotens 100 erzeugt einen Authentifizierungsindikator, welcher eine erfolgreiche oder fehlgeschlagene Authentifizierung des weiteren Netzwerkknotens 200 durch den Netzwerkknoten 100 anzeigt. Ferner empfängt die Kommunikationsschnittstelle des Netzwerkknotens 100 eine Mehrzahl von weiteren Authentifizierungsindikatoren über das Kommunikationsnetzwerk von den Netzwerkknoten 100a, 100b, 100c, 100d, welche jeweils eine erfolgreiche oder fehlgeschlagene Authentifizierung des weiteren Netzwerkknotens 200 durch den jeweiligen Netzwerkknoten 100a, 100b, 100c, 100d anzeigen. Der Prozessor des Netzwerkknotens 100 bestimmt auf der Basis des Authentifizierungsindikators und der Mehrzahl von weiteren Authentifizierungsindikatoren eine Anzahl von erfolgreichen Authentifizierungen des weiteren Netzwerkknotens 200 und eine Anzahl von fehlgeschlagenen Authentifizierungen des weiteren Netzwerkknotens 200.

Der Prozessor des Netzwerkknotens 100 ist ausgebildet, die Anzahl von erfolgreichen Authentifizierungen des weiteren Netzwerkknotens 200 mit der Anzahl von fehlgeschlagenen Authentifizierungen des weiteren Netzwerkknotens 200 zu vergleichen. Der Prozessor des Netzwerkknotens 100 kann folglich eine Übertragung von Nutzdaten zwischen dem Netzwerkknoten 100 und dem weiteren Netzwerkknoten 200 zu unterbinden falls die Anzahl von erfolgreichen Authentifizierungen kleiner oder gleich der Anzahl von fehlgeschlagenen Authentifizierungen ist, und die Übertragung von Nutzdaten zwischen dem Netzwerkknoten 100 und dem weiteren Netzwerkknoten 200 zuzulassen falls die Anzahl von erfolgreichen Authentifizierungen größer als die Anzahl von fehlgeschlagenen Authentifizierungen ist.

Das Konzept kann auf beliebige Topologien des Kommunikationsnetzwerkes erweitert werden. Ferner kann jeder einzelne Netzwerkknoten sowohl die Funktionalität des Netzwerkknotens 100 als auch die Funktionalität des Netzwerkknotens 200 zugleich aufweisen. Folglich kann eine Überwachung eines jeden Netzwerkknotens in dem Kommunikationsnetzwerk durch jeden anderen Netzwerkknoten realisiert werden.

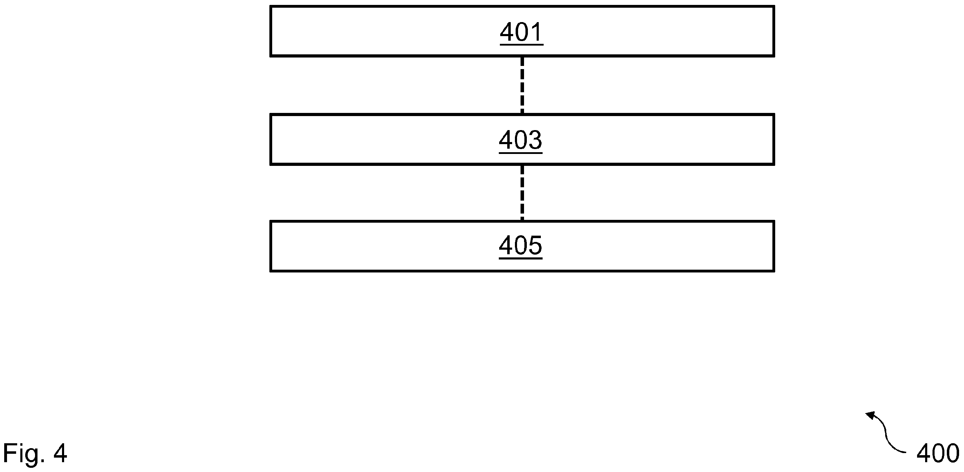

Fig. 4 zeigt ein schematisches Diagramm eines Verfahrens 400 zum Betreiben eines Netzwerkknotens zum Erzeugen eines Authentifizierungsindikators. Der Netzwerkknoten umfasst eine Kommunikationsschnittstelle, einen Speicher und einen Prozessor. Der Speicher ist ausgebildet, einen Referenzbetriebsparameter eines weiteren Netzwerkknotens zu speichern, wobei der Referenzbetriebsparameter einen Referenzbetriebszustand des weiteren Netzwerkknotens repräsentiert. Das Verfahren 400 umfasst ein Empfangen 401 eines Betriebsparameters des weiteren Netzwerkknotens über ein Kommunikationsnetzwerk durch die Kommunikationsschnittstelle, wobei der Betriebsparameter des weiteren Netzwerkknotens einen Betriebszustand des weiteren Netzwerkknotens repräsentiert, ein Vergleichen 403 des Betriebsparameters mit dem Referenzbetriebsparameter durch den Prozessor, um ein Vergleichsergebnis zu erhalten, und ein Erzeugen 405 des Authentifizierungsindikators auf der Basis des Vergleichsergebnisses durch den Prozessor, wobei der Authentifizierungsindikator eine erfolgreiche Authentifizierung des weiteren Netzwerkknotens durch den Netzwerkknoten oder eine fehlgeschlagene Authentifizierung des weiteren Netzwerkknotens durch den Netzwerkknoten anzeigt.

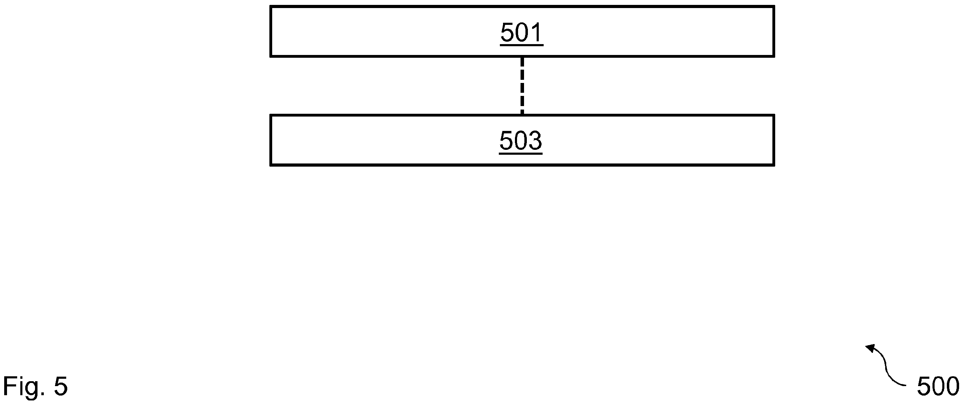

Fig. 5 zeigt ein schematisches Diagramm eines Verfahrens 500 zum Betreiben eines Netzwerkknotens zum Aussenden eines Betriebsparameters des Netzwerkknotens. Der Netzwerkknoten umfasst eine Erfassungseinrichtung und eine Kommunikationsschnittstelle. Das Verfahren 500 umfasst ein Erfassen 501 des Betriebsparameters des Netzwerkknotens durch die Erfassungseinrichtung, wobei der Betriebsparameter des Netzwerkknotens einen Betriebszustand des Netzwerkknotens repräsentiert, und ein Aussenden 503 des Betriebsparameters des Netzwerkknotens über ein Kommunikationsnetzwerk durch die Kommunikationsschnittstelle.

Zusammenfassend wird durch das Konzept eine Möglichkeit geschaffen, ein heterogenes Kommunikationsnetzwerk mit Netzwerkknoten, welche analoge Komponenten, digitale Komponenten und Kommunikationsschnittstellen aufweisen, hinsichtlich der Authentizität und Integrität der Netzwerkknoten zu überwachen. Insbesondere kann eine gegenseitige Authentifizierung der Netzwerkknoten erfolgen. Die Netzwerkknoten können beispielsweise durch Maschinen, analoge oder digitale Sensoren, Mikrocontroller, PCs, mobile Endgeräte, oder Softwarekomponenten gebildet sein. Ferner kann auf die Verwendung einer Zentralinstanz verzichtet werden, wodurch die Datensicherheit in dem Kommunikationsnetzwerk erhöht werden kann. Jeder Netzwerkknoten des Kommunikationsnetzwerkes kann dabei seine jeweiligen Nachbarn aktiv kontrollieren und analoge sowie digitale Größen als Charakteristika verwenden.

Bei der Überprüfung der Authentizität und Integrität des Kommunikationsnetzwerkes können insbesondere zwei Szenarien voneinander unterschieden werden. Das Konzept kann in beiden Szenarien gleichermaßen verwendet werden.

Das erste Szenario betrifft ein Hochfahren eines weiteren Netzwerkknotens. Gemäß einer Ausführungsform wird dabei eine initiale Authentifizierung durchgeführt. Bei diesem Szenario sollte der weitere Netzwerkknoten, der entweder neu in das Kommunikationsnetzwerk kommt oder eine bestimmte Zeit deaktiviert bzw. offline war, wieder neu überprüft werden. Dabei kann geklärt werden, ob der hochfahrende weitere Netzwerkknoten bereits Bestandteil des Kommunikationsnetzwerkes war oder, wenn es sich um einen neu hinzukommenden weiteren Netzwerkknoten handelt, ob dieser die Voraussetzung erfüllt, um in das bestehende Kommunikationsnetzwerk aufgenommen zu werden und Nutzdaten übertragen darf.

Für die Überprüfung kann beispielsweise ein charakteristischer Betriebsparameter für das Hochfahren des weiteren Netzwerkknotens verwendet werden. Die Mehrzahl von Netzwerkknoten in der Nachbarschaft des hochfahrenden weiteren Netzwerkknotens können diesen charakteristischen Betriebsparameter jeweils selbständig und automatisiert identifiziert und jeweils bei sich als Referenzbetriebsparameter abgespeichert haben.

Wenn der weitere Netzwerkknoten bereits bekannt ist, kann für diesen bereits jeweils ein Authentifizierungsindikator erzeugt werden. Wenn ein jeweiliger Netzwerkknoten jedoch keinen Referenzbetriebsparameter für den weiteren Netzwerkknoten findet, kann dieser weitere Netzwerkknoten als neu definiert und ein Referenzbetriebsparameter betreffend sein erstmaliges Hochfahrverhalten abgespeichert werden. Der weitere Netzwerkknoten stellt den Betriebsparameter hierfür bereit und kann diesen periodisch aussenden.

Das zweite Szenario betrifft einen laufenden Betrieb des weiteren Netzwerkknotens. Gemäß einer Ausführungsform wird dabei eine dynamische Authentifizierung durchgeführt. Damit die Authentizität und Integrität des Kommunikationsnetzwerkes auch im bestehenden Betrieb geprüft werden kann, kann eine Überprüfung der Netzwerkknoten im laufenden Betrieb erfolgen. So kann sich beispielsweise der Zustand bzw. das Verhalten des weiteren Netzwerkknotens im laufenden Betrieb ändern, beispielsweise weil eine neue Software auf diesen Netzwerkknoten geladen wird, weil eine Teilkomponente dieses Netzwerkknotens wieder hochfährt oder in Betrieb genommen wird, oder weil eine kritische Alterung in diesem Netzwerkknoten oder dem Kommunikationsnetzwerk selbst stattgefunden hat.

Im laufenden Betrieb wird durch die Mehrzahl von Netzwerkknoten analysiert, wie der Betriebszustand bzw. das Betriebsverhalten des benachbarten weiteren Netzwerkknotens aussieht. Durch zumindest einen bereitgestellten Betriebsparameter des weiteren Netzwerkknotens wird es der Mehrzahl von Netzwerkknoten ermöglicht zu bestimmen, ob es sich um den gleichen weiteren Netzwerkknoten handelt. Gemäß einer Ausführungsform kann hierfür eine Korrelationsanalyse oder ein Ansatz aus dem Bereich der künstlichen Intelligenz zum Einsatz kommen.

In beiden Szenarien kann eine Überwachung der benachbarten Netzwerkknoten auf folgende Art realisiert werden: Jeder Netzwerkknoten stellt zumindest einen Betriebsparameter bereit, welche er über sich selber liefern kann, insbesondere eine analoge und/oder eine digitale Größe. Gemäß einer Ausführungsform repräsentiert der Betriebsparameter eine Stromkurve, eine Spannungskurve, ein kryptographisches Zertifikat, oder eine Softwareversion. Gemäß einer Ausführungsform ist der Betriebsparameter Teil einer Stromkurve, einer Spannungskurve, eines kryptographischen Zertifikats, oder einer Softwareversion. Ferner kann jeder Netzwerkknoten eine eindeutige Identifikationskennung (ID) des jeweiligen Netzwerkknotens gemeinsam mit dem zumindest einen Betriebsparameter bereitstellen. Jeder Netzwerkknoten kann selbst evaluieren und bestimmen, welchen Netzwerkknoten er in seiner Nachbarschaft überprüft. Dabei kann die Maxime gelten, dass jeder Netzwerkknoten versucht, möglichst viele weitere Netzwerkknoten zu überwachen, ohne eine Einschränkung hinsichtlich der eigenen Performance in Kauf nehmen zu müssen.

Sollte beispielsweise der Fall eintreten, dass ein neuer Netzwerkknoten Nutzdaten liefert, die von keinem anderen Netzwerkknoten ausgewertet werden sollen, dann wird dieser Knoten auch nicht in das Kommunikationsnetzwerk integriert. Bei einer signifikanten Veränderung des Betriebszustandes bzw. des Betriebsverhaltens des weiteren Netzwerkknotens, entscheiden die benachbarten Netzwerkknoten bzw. das Kommunikationsnetzwerk, ob es sich bei der Veränderung um eine Anomalie handelt. Wenn diese Frage mehrheitlich bejaht wird, kann der betroffene Netzwerkknoten isoliert und die Übertragung von Nutzdaten von bzw. zu diesem Netzwerkknoten eingestellt werden.

Das Konzept erlaubt eine Erhöhung der Sicherheit durch eine gegenseitige Authentifizierung der Netzwerkknoten. Mittels einer Analyse der Betriebsparameter kann ein potentieller Ausfall eines Netzwerkknotens vorhergesagt werden (engl. predictive point of failure). Ferner kann eine dezentrale Speicherung und Auswertung von kritischen Betriebsparametern erfolgen, wodurch die Sicherheit weiter erhöht werden kann. Zudem kann ein sicheres Kommunikationsnetzwerk für Anwendungen auf dem Gebiet der Industrie 4.0 mit unterschiedlichen Sensoren, Maschinen und Prozessen realisiert werden, in welchem jeder Netzwerkknoten beispielsweise seine direkte Nachbarschaft kontrolliert, und in welchem beispielsweise ein An- oder Ausschaltvorgang sowie ein laufender Betrieb von Netzwerkknoten durch andere Netzwerkknoten kontrolliert werden kann.

Alle in Verbindung mit einzelnen Ausführungsformen der Erfindung beschriebenen oder gezeigten Merkmale können in unterschiedlicher Kombination in dem erfindungsgemäßen Gegenstand vorgesehen sein, um gleichzeitig deren vorteilhafte Wirkungen zu realisieren.

### BEZUGSZEICHENLISTE

- 100: Netzwerkknoten
- 100a: Netzwerkknoten
- 100b: Netzwerkknoten
- 100c: Netzwerkknoten
- 100d: Netzwerkknoten
- 101: Kommunikationsschnittstelle
- 103: Speicher
- 105: Prozessor

- 200: Netzwerkknoten
- 201: Erfassungseinrichtung
- 203: Kommunikationsschnittstelle

- 300: Kommunikationssystem

- 400: Verfahren zum Betreiben eines Netzwerkknotens
- 401: Empfangen eines Betriebsparameters
- 403: Vergleichen des Betriebsparameters mit dem Referenzbetriebsparameter
- 405: Erzeugen des Authentifizierungsindikators

- 500: Verfahren zum Betreiben eines Netzwerkknotens
- 501: Erfassen des Betriebsparameters des Netzwerkknotens
- 503: Aussenden des Betriebsparameters des Netzwerkknotens

## Patentansprüche

1. Netzwerkknoten (100) zum Erzeugen eines Authentifizierungsindikators, mit:
einer Kommunikationsschnittstelle (101), welche ausgebildet ist, einen Betriebsparameter eines weiteren Netzwerkknotens (200) über ein Kommunikationsnetzwerk zu empfangen, wobei der Betriebsparameter des weiteren Netzwerkknotens (200) einen Betriebszustand des weiteren Netzwerkknotens (200) repräsentiert;
einem Speicher (103), welcher ausgebildet ist, einen Referenzbetriebsparameter des weiteren Netzwerkknotens (200) zu speichern, wobei der Referenzbetriebsparameter einen Referenzbetriebszustand des weiteren Netzwerkknotens (200) repräsentiert; und
einem Prozessor (105), welcher ausgebildet ist, den Betriebsparameter mit dem Referenzbetriebsparameter zu vergleichen, um ein Vergleichsergebnis zu erhalten, und den Authentifizierungsindikator auf der Basis des Vergleichsergebnisses zu erzeugen, wobei der Authentifizierungsindikator eine erfolgreiche Authentifizierung des weiteren Netzwerkknotens (200) durch den Netzwerkknoten (100) oder eine fehlgeschlagene Authentifizierung des weiteren Netzwerkknotens (200) durch den Netzwerkknoten (100) anzeigt,
wobei die Kommunikationsschnittstelle (101) ausgebildet ist, eine Mehrzahl von weiteren Authentifizierungsindikatoren über das Kommunikationsnetzwerk zu empfangen, und wobei der Prozessor (105) ausgebildet ist, eine Anzahl von erfolgreichen Authentifizierungen des weiteren Netzwerkknotens (200) auf der Basis des Authentifizierungsindikators und der Mehrzahl von weiteren Authentifizierungsindikatoren zu bestimmen, und eine Anzahl von fehlgeschlagenen Authentifizierungen des weiteren Netzwerkknotens (200) auf der Basis des Authentifizierungsindikators und der Mehrzahl von weiteren Authentifizierungsindikatoren zu bestimmen,
**dadurch gekennzeichnet, dass**
der Prozessor (105) ausgebildet ist, die Anzahl von erfolgreichen Authentifizierungen des weiteren Netzwerkknotens (200) mit der Anzahl von fehlgeschlagenen Authentifizierungen des weiteren Netzwerkknotens (200) zu vergleichen, und eine Übertragung von Nutzdaten zwischen dem Netzwerkknoten (100) und dem weiteren Netzwerkknoten (200) zu unterbinden falls die Anzahl von erfolgreichen Authentifizierungen kleiner oder gleich der Anzahl von fehlgeschlagenen Authentifizierungen ist.

2. Netzwerkknoten (100) nach Anspruch 1, wobei die Kommunikationsschnittstelle (101) ausgebildet ist, den Authentifizierungsindikator über das Kommunikationsnetzwerk auszusenden.

3. Netzwerkknoten (100) nach Anspruch 1 oder 2, wobei der Prozessor (105) ausgebildet ist, die Übertragung von Nutzdaten zwischen dem Netzwerkknoten (100) und dem weiteren Netzwerkknoten (200) zuzulassen falls die Anzahl von erfolgreichen Authentifizierungen größer als die Anzahl von fehlgeschlagenen Authentifizierungen ist.

4. Netzwerkknoten (100) nach einem der vorstehenden Ansprüche, wobei der Betriebsparameter zumindest einen der folgenden Betriebsparameter umfasst: eine elektrische Spannung einer elektrischen Schaltung des weiteren Netzwerkknotens (200), einen elektrischen Strom einer elektrischen Schaltung des weiteren Netzwerkknotens (200), eine Resonanzfrequenz einer elektrischen Schaltung des weiteren Netzwerkknotens (200), eine Betriebstemperatur des weiteren Netzwerkknotens (200), eine Prozessorauslastung eines Prozessors des weiteren Netzwerkknotens (200), oder eine Speicherauslastung eines Speichers des weiteren Netzwerkknotens (200).

5. Netzwerkknoten (100) nach einem der vorstehenden Ansprüche, wobei die Kommunikationsschnittstelle (101) ausgebildet ist, den Betriebsparameter des weiteren Netzwerkknotens (200) periodisch innerhalb eines vorbestimmtes Zeitintervalls über das Kommunikationsnetzwerk zu empfangen, und wobei der Prozessor (105) ausgebildet ist, eine Parametermetrik, insbesondere einen Mittelwert, einen Minimalwert oder einen Maximalwert, des periodisch empfangenen Betriebsparameters innerhalb des vorbestimmten Zeitintervalls zu bestimmen, und die Parametermetrik als Referenzbetriebsparameter in dem Speicher (103) zu speichern.

6. Kommunikationssystem (300) zum Kommunizieren über ein Kommunikationsnetzwerk, mit:
einem Netzwerkknoten (100) nach einem der Ansprüche 1 bis 5; und
einem weiteren Netzwerkknoten (200) zum Aussenden eines Betriebsparameters des weiteren Netzwerkknotens (200), wobei der weitere Netzwerkknoten (200) Folgendes umfasst:
eine Erfassungseinrichtung (201), welche ausgebildet ist, den Betriebsparameters des weiteren Netzwerkknotens (200) zu erfassen, wobei der Betriebsparameter des weiteren Netzwerkknotens (200) einen Betriebszustand des weiteren Netzwerkknotens (200) repräsentiert; und
eine Kommunikationsschnittstelle (203), welche ausgebildet ist, den Betriebsparameter des weiteren Netzwerkknotens (200) über ein Kommunikationsnetzwerk auszusenden.

7. Kommunikationssystem (300) nach Anspruch 6, wobei der Netzwerkknoten (100) und der weitere Netzwerkknoten (200) logisch benachbart sind, oder wobei der Netzwerkknoten (100) und der weitere Netzwerkknoten (200) geographisch benachbart sind.

8. Verfahren (400) zum Betreiben eines Netzwerkknotens (100) zum Erzeugen eines Authentifizierungsindikators, wobei der Netzwerkknoten (100) eine Kommunikationsschnittstelle (101), einen Speicher (103) und einen Prozessor (105) umfasst, wobei der Speicher (103) ausgebildet ist, einen Referenzbetriebsparameter eines weiteren Netzwerkknotens (200) zu speichern, wobei der Referenzbetriebsparameter einen Referenzbetriebszustand des weiteren Netzwerkknotens (200) repräsentiert, mit:
Empfangen (401) eines Betriebsparameters des weiteren Netzwerkknotens (200) über ein Kommunikationsnetzwerk durch die Kommunikationsschnittstelle (101), wobei der Betriebsparameter des weiteren Netzwerkknotens (200) einen Betriebszustand des weiteren Netzwerkknotens (200) repräsentiert;
Vergleichen (403) des Betriebsparameters mit dem Referenzbetriebsparameter durch den Prozessor (105), um ein Vergleichsergebnis zu erhalten;
Erzeugen (405) des Authentifizierungsindikators auf der Basis des Vergleichsergebnisses durch den Prozessor (105), wobei der Authentifizierungsindikator eine erfolgreiche Authentifizierung des weiteren Netzwerkknotens (200) durch den Netzwerkknoten (100) oder eine fehlgeschlagene Authentifizierung des weiteren Netzwerkknotens (200) durch den Netzwerkknoten (100) anzeigt,
Empfangen einer Mehrzahl von weiteren Authentifizierungsindikatoren über das Kommunikationsnetzwerk durch die Kommunikationsschnittstelle (101),
Bestimmen einer Anzahl von erfolgreichen Authentifizierungen des weiteren Netzwerkknotens (200) auf der Basis des Authentifizierungsindikators und der Mehrzahl von weiteren Authentifizierungsindikatoren durch den Prozessor (105),
Bestimmen einer Anzahl von fehlgeschlagenen Authentifizierungen des weiteren Netzwerkknotens (200) auf der Basis des Authentifizierungsindikators und der Mehrzahl von weiteren Authentifizierungsindikatoren durch den Prozessor (105),
**gekennzeichnet durch** die folgenden Schritte:
Vergleichen der Anzahl von erfolgreichen Authentifizierungen des weiteren Netzwerkknotens (200) mit der Anzahl von fehlgeschlagenen Authentifizierungen des weiteren Netzwerkknotens (200) durch den Prozessor (105), und
Unterbinden einer Übertragung von Nutzdaten zwischen dem Netzwerkknoten (100) und dem weiteren Netzwerkknoten (200) durch den Prozessor (105), falls die Anzahl von erfolgreichen Authentifizierungen kleiner oder gleich der Anzahl von fehlgeschlagenen Authentifizierungen ist.

9. Computerprogramm mit einem Programmcode zum Ausführen des Verfahrens (400) nach Anspruch 8, wenn das Programm auf einem Netzwerkknoten (100; 200) ausgeführt wird.

## Claims

1. Network node (100) for generating an authentication indicator, comprising:
a communication interface (101) configured to receive an operating parameter of a further network node (200) via a communication network, wherein the operating parameter of the further network node (200) represents an operating state of the further network node (200);
a memory (103) configured to store a reference operating parameter of the further network node (200), wherein the reference operating parameter represents a reference operating state of the further network node (200); and
a processor (105) configured to compare the operating parameter with the reference operating parameter in order to obtain a comparison result, and to generate the authentication indicator on the basis of the comparison result, wherein the authentication indicator indicates a successful authentication of the further network node (200) by the network node (100) or a failed authentication of the further network node (200) by the network node (100),
wherein the communication interface (101) is configured to receive a plurality of further authentication indicators via the communication network, and wherein the processor (105) is configured to determine a number of successful authentications of the further network node (200) on the basis of the authentication indicator and the plurality of further authentication indicators, and to determine a number of failed authentications of the further network node (200) on the basis of the authentication indicator and the plurality of further authentication indicators,
**characterized in that**
the processor (105) is configured to compare the number of successful authentications of the further network node (200) with the number of failed authentications of the further network node (200), and to suppress a transmission of user data between the network node (100) and the further network node (200) if the number of successful authentications is less than or equal to the number of failed authentications.

2. Network node (100) according to claim 1, wherein the communication interface (101) is configured to transmit the authentication indicator via the communication network.

3. Network node (100) according to claim 1 or 2, wherein the processor (105) is configured to allow the transmission of user data between the network node (100) and the further network node (200) if the number of successful authentications is greater than the number of failed authentications.

4. Network node (100) according to one of the preceding claims, wherein the operating parameter comprises at least one of the following operating parameters: an electrical voltage of an electrical circuit of the further network node (200), an electrical current of an electrical circuit of the further network node (200), a resonance frequency of an electrical circuit of the further network node (200), an operating temperature of the further network node (200), a processor load of a processor of the further network node (200), or a memory load of a memory of the further network node (200).

5. Network node (100) according to one of the preceding claims, wherein the communication interface (101) is configured to receive the operating parameter of the further network node (200) periodically within a predetermined time interval via the communication network, and wherein the processor (105) is configured to determine a parameter metric, in particular an average value, a minimum value or a maximum value, of the periodically received operating parameter within the predetermined time interval, and to store the parameter metric as a reference operating parameter in the memory (103).

6. Communication system (300) for communicating via a communication network, the communication system comprising:
a network node (100) according to any one of claims 1 to 5; and
a further network node (200) for transmitting an operating parameter of the further network node (200), wherein the further network node (200) comprises:
a detection device (201) configured to detect the operating parameter of the further network node (200), wherein the operating parameter of the further network node (200) represents an operating state of the further network node (200); and
a communication interface (203) configured to transmit the operating parameter of the further network node (200) via a communication network.

7. Communication system (300) according to claim 6, wherein the network node (100) and the further network node (200) are logically adjacent, or wherein the network node (100) and the further network node (200) are geographically adjacent.

8. Method (400) for operating a network node (100) for generating an authentication indicator, wherein the network node (100) comprises a communication interface (101), a memory (103) and a processor (105), wherein the memory (103) is configured to store a reference operating parameter of a further network node (200), wherein the reference operating parameter represents a reference operating state of the further network node (200), the method comprising:
receiving (401) an operating parameter of the further network node (200) via a communication network by the communication interface (101), wherein the operating parameter of the further network node (200) represents an operating state of the further network node (200);
comparing (403) the operating parameter with the reference operating parameter by the processor (105) to obtain a comparison result;
generating (405) the authentication indicator on the basis of the comparison result by the processor (105), wherein the authentication indicator indicates a successful authentication of the further network node (200) by the network node (100) or a failed authentication of the further network node (200) by the network node (100);
receiving a plurality of further authentication indicators via the communication network by the communication interface (101),
determining, by the processor (105), a number of successful authentications of the further network node (200) on the basis of the authentication indicator and the plurality of further authentication indicators,
determining, by the processor (105), a number of failed authentications of the further network node (200) on the basis of the authentication indicator and the plurality of further authentication indicators,
**characterized by** the following steps:
comparing, by the processor (105), the number of successful authentications of the further network node (200) with the number of failed authentications of the further network node (200), and
suppressing, by the processor (105), transmission of user data between the network node (100) and the further network node (200) if the number of successful authentications is less than or equal to the number of failed authentications.

9. Computer program with a program code for executing the method (400) according to claim 8, if the program is executed on a network node (100; 200).

## Revendications

1. Nœud de réseau (100) destiné à générer un indicateur d'authentification, comprenant :
une interface de communication (101), laquelle est configurée pour recevoir un paramètre de fonctionnement d'un autre nœud de réseau (200) par le biais d'un réseau de communication, le paramètre de fonctionnement de l'autre nœud de réseau (200) représentant un état de fonctionnement de l'autre nœud de réseau (200) ;
une mémoire (103), laquelle est configurée pour mémoriser un paramètre de fonctionnement de référence de l'autre nœud de réseau (200), le paramètre de fonctionnement de référence représentant un état de fonctionnement de référence de l'autre nœud de réseau (200) ; et
un processeur (105), lequel est configuré pour comparer le paramètre de fonctionnement avec le paramètre de fonctionnement de référence afin d'obtenir un résultat de comparaison, et générer l'indicateur d'authentification sur la base du résultat de comparaison, l'indicateur d'authentification indiquant une authentification réussie de l'autre nœud de réseau (200) par le nœud de réseau (100) ou un échec de l'authentification de l'autre nœud de réseau (200) par le nœud de réseau (100),
l'interface de communication (101) étant configurée pour recevoir une pluralité d'autres indicateurs d'authentification par le biais du réseau de communication, et le processeur (105) étant configuré pour déterminer un nombre d'authentifications réussies de l'autre nœud de réseau (200) sur la base de l'indicateur d'authentification et de la pluralité d'autres indicateurs d'authentification, et pour déterminer un nombre d'échecs d'authentification de l'autre nœud de réseau (200) sur la base de l'indicateur d'authentification et de la pluralité d'autres indicateurs d'authentification,
**caractérisé en ce que**
le processeur (105) est configuré pour comparer le nombre d'authentifications réussies de l'autre nœud de réseau (200) avec le nombre d'échecs d'authentification de l'autre nœud de réseau (200) et inhiber une transmission de données utiles entre le nœud de réseau (100) et l'autre nœud de réseau (200) dans le cas où le nombre d'authentifications réussies est inférieur ou égal au nombre d'échecs d'authentification.

2. Nœud de réseau (100) selon la revendication 1, l'interface de communication (101) étant configurée pour envoyer l'indicateur d'authentification par le biais du réseau de communication.

3. Nœud de réseau (100) selon la revendication 1 ou 2, le processeur (105) étant configuré pour autoriser la transmission de données utiles entre le nœud de réseau (100) et l'autre nœud de réseau (200) dans le cas où le nombre d'authentifications réussies est supérieur au nombre d'échecs d'authentification.

4. Nœud de réseau (100) selon l'une des revendications précédentes, le paramètre de fonctionnement comprenant au moins l'un des paramètres de fonctionnement suivants : une tension électrique d'un circuit électrique de l'autre nœud de réseau (200), un courant électrique d'un circuit électrique de l'autre nœud de réseau (200), une fréquence de résonance d'un circuit électrique de l'autre nœud de réseau (200), une température de fonctionnement de l'autre nœud de réseau (200), un taux d'utilisation de processeur d'un processeur de l'autre nœud de réseau (200) ou un taux d'utilisation de mémoire d'une mémoire de l'autre nœud de réseau (200).

5. Nœud de réseau (100) selon l'une des revendications précédentes, l'interface de communication (101) étant configurée pour recevoir le paramètre de fonctionnement de l'autre nœud de réseau (200) périodiquement au sein d'un intervalle de temps prédéterminé par le biais du réseau de communication, et le processeur (105) étant configuré pour déterminer un indice de mesure de paramètre, notamment une valeur moyenne, une valeur minimale ou une valeur maximale, du paramètre de fonctionnement reçu périodiquement au sein de l'intervalle de temps prédéterminé, et mémoriser l'indice de mesure de paramètre dans la mémoire (103) en tant que paramètre de fonctionnement de référence.

6. Système de communication (300) servant à communiquer par le biais d'un réseau de communication, comprenant :
un nœud de réseau (100) selon l'une des revendications 1 à 5 ; et
un autre nœud de réseau (200) destiné à envoyer un paramètre de fonctionnement de l'autre nœud de réseau (200), l'autre nœud de réseau (200) comprenant les éléments suivants :
un dispositif d'acquisition (201), lequel est configuré pour acquérir le paramètre de fonctionnement de l'autre nœud de réseau (200), le paramètre de fonctionnement de l'autre nœud de réseau (200) représentant un état de fonctionnement de l'autre nœud de réseau (200) ; et
une interface de communication (203), laquelle est configurée pour envoyer le paramètre de fonctionnement de l'autre nœud de réseau (200) par le biais d'un réseau de communication.

7. Système de communication (300) selon la revendication 6, le nœud de réseau (100) et l'autre nœud de réseau (200) étant logiquement voisins, ou le nœud de réseau (100) et l'autre nœud de réseau (200) étant géographiquement voisins.

8. Procédé (400) pour faire fonctionner un nœud de réseau (100) destiné à générer un indicateur d'authentification, le nœud de réseau (100) comprenant une interface de communication (101), une mémoire (103) et un processeur (105), la mémoire (103) étant configurée pour mémoriser un paramètre de fonctionnement de référence d'un autre nœud de réseau (200), le paramètre de fonctionnement de référence représentant un état de fonctionnement de référence de l'autre nœud de réseau (200), comprenant :
la réception (401) d'un paramètre de fonctionnement de l'autre nœud de réseau (200) par le biais d'un réseau de communication par l'interface de communication (101), le paramètre de fonctionnement de l'autre nœud de réseau (200) représentant un état de fonctionnement de l'autre nœud de réseau (200) ;
la comparaison (403) du paramètre de fonctionnement avec le paramètre de fonctionnement de référence par le processeur (105) afin d'obtenir un résultat de comparaison ;
la génération (405) de l'indicateur d'authentification sur la base du résultat de comparaison par le processeur (105), l'indicateur d'authentification indiquant une authentification réussie de l'autre nœud de réseau (200) par le nœud de réseau (100) ou un échec de l'authentification de l'autre nœud de réseau (200) par le nœud de réseau (100),
la réception d'une pluralité d'autres indicateurs d'authentification par le biais du réseau de communication par l'interface de communication (101),
la détermination d'un nombre d'authentifications réussies de l'autre nœud de réseau (200) sur la base de l'indicateur d'authentification et de la pluralité d'autres indicateurs d'authentification par le processeur (105),
la détermination d'un nombre d'échecs d'authentification de l'autre nœud de réseau (200) sur la base de l'indicateur d'authentification et de la pluralité d'autres indicateurs d'authentification par le processeur (105),
**caractérisé par** les étapes suivantes :
la comparaison du nombre d'authentifications réussies de l'autre nœud de réseau (200) avec le nombre d'échecs d'authentification de l'autre nœud de réseau (200) par le processeur (105) et
l'inhibition d'une transmission de données utiles entre le nœud de réseau (100) et l'autre nœud de réseau (200) par le processeur (105) dans le cas où le nombre d'authentifications réussies est inférieur ou égal au nombre d'échecs d'authentification.

9. Programme informatique comprenant un code de programme destiné à mettre en œuvre le procédé (400) selon la revendication 8 lorsque le programme est exécuté sur un nœud de réseau (100 ; 200).
